# EUROPÄISCHE PATENTANMELDUNG

(11) **EP 2 009 258 A2**
(43) Veröffentlichungstag der Anmeldung: **31.12.2008**
(21) Anmeldenummer: 08008635.8
(22) Anmeldetag: 07.05.2008
(51) Int. Cl.: F01N 7/18

(54) **Steifer Träger für eine Aufhängung einer Abgasanlage eines Kraftfahrzeugs**

(30) Priorität: 28.06.2007 DE 202007009069 U
(71) Anmelder: Anvis Deutschland GmbH, 63628 Bad Soden-Salmünster (DE)
(72) Erfinder: Heckmann, Gerhard, 36381 Schlüchtern (DE); Kolb, Ralf, 38381 Schlüchtern (DE); Möller, Ralf, 36381 Schlüchtern (DE)
(74) Vertreter: Schmid, Nils T.F.

(57) **Zusammenfassung**

Steifer Träger für eine Aufhängung einer Abgasanlage eines Kraftfahrzeugs, umfassend eine insbesondere stangenartige Langbasis (13), die zum ortsfesten Anbringen an einem Karosserieteil ausgelegt ist und derart bemessen ist, daß er einen Zwischenraum zwischen der Abgasanlage und der Karosserie quer zur Fahrtrichtung erstreckend durchdringt und mit zwei Enden zwei gegenüberliegende Längsaußenseiten der Abgasanlage in Querrichtung überragt, wenigstens einen an der Langbasis (13) fest angeordneten Haltearm (4,104), der neben der Abgasanlage von der Karosserie weg ragt, und einen an dem Haltearm (4,104) ortsfest angeordneten Haltestift (21,121), an dem eine elastische Schlaufe zum Anbinden an die Abgasanlage ankoppelbar ist.

## Beschreibung

Die Erfindung betrifft einen steifen Träger für eine Aufhängung einer Abgasanlage eines Kraftfahrzeugs.

Eine elastische Aufhängung für eine Abgasanlage ist beispielsweise aus DE 200 218 44 U1 bekannt. Die Abgasanlage ist über eine Pendellageranordnung an der Karosserie angebunden. Das Pendellager hat einen die Abgasanlage teilweise umgreifenden Bügel, der die Abgasanlage mit einem abgasanlagenseitigen Lagerbolzen verbindet. Der abgasanlagenseitige Lagerbolzen ist mit einem karosserieseitigen Lagerbolzen über eine Elastomerschlaufe mit zwei entsprechenden Lagerbuchsen verbunden. Der karosserieseitige Lagerbolzen ist verschieblich an der Karosserie befestigt. Die Elastomerschlaufe ist durch einen starren Rahmen aus Kunststoff verstärkt.

Diese bekannte elastische Aufhängung hat sich zwar bewährt, was akustische Isolierungseigenschaften zwischen der Abgasanlage und der Karosserie betrifft, allerdings führen der hohe Montageaufwand und das hohe Gewicht insbesondere aufgrund der großen Teilezahl zu verhältnismäßig hohen Produkt- und Fertigungskosten.

Es ist Aufgabe der Erfindung, eine Aufhängung für eine Kraftfahrzeug-Abgasanlage zu schaffen, welche Aufhängung die Nachteile des Standes der Technik überwindet, insbesondere mit einem geringen Montageaufwand und kostengünstig realisierbar ist.

Diese Aufgabe wird durch die Merkmale von Anspruch 1 gelöst. Danach umfaßt der steife Träger einer elastischen Aufhängung eines Kraftfahrzeugs eine insbesondere stangenartige Langbasis, die zum ortsfesten Anbringen an einem Karosserieteil ausgelegt ist und derart bemessen ist, daß er einen Zwischenraum zwischen der Abgasanlage und der Karosserie quer zur Fahrtrichtung durchdringt und mit zwei Enden zwei gegenüberliegende Außenseiten der Abgasanlage in der Querrichtung überragt. Des weiteren umfaßt der steife Träger wenigstens einen an der Langbasis angeordneten Haltearm, der sich insbesondere senkrecht von der Langbasis weg erstreckt und seitlich neben der Abgasanlage von der Karosserie weg vorsteht. Schließlich ist der erfindungsgemäße steife Träger der elastischen Aufhängung durch einen an dem Haltearm ortsfest angebrachten Haltestift gebildet, an dem eine elastische Schlaufe zum Anbringen an die Abgasanlage ankoppelbar ist.

Insbesondere sind die Langbasis und der Halteträger aus einem Stück, insbesondere Kunststoffstück, gefertigt.

Die Langbasis kann insbesondere über eine im wesentlichen flache Montagefläche an einem Karosserieteil ortsfest angeflanscht sein und ist derart bemessen, daß sie einen freien Zwischenraum zwischen der Abgasanlage und der Karosserie quer zur Abgasanlagenlängsrichtung erstreckend durchdringen kann. Der Zwischenraum kann zusätzlich auf der von der Karosserie abgewandten Seite von einer Kardanwelle begrenzt sein. Vorzugsweise ist der Haltearm derart an der Karosserie zu montieren, daß der Haltestift quer zu der Fahrtrichtung auf die Abgasanlage zu oder von dieser weg weist und insbesondere größtenteils bezüglich der Längsrichtung der Abgasanlage seitlich versetzt ist. Des weiteren ist erfindungsgemäß vorgesehen, die Langbasis, den Haltearm und den Haltestift aus einem einzigen Kunststoffteil zu fertigen, insbesondere zu spritzen. Mit der erfindungsgemäßen Langbasis, von der der Haltearm einstückig vorsteht, wird eine Überbrückung oberhalb der Abgasanlage, also auf der der Karosserie zugewandten Seite der Abgasanlage, geschaffen, wodurch eine optimale Einleitung der Betriebslastkräfte der Abgasanlage in die Karosserie geschaffen wird. Es zeigte sich überraschenderweise, daß mit Hilfe der Langbasis, die sich über beide Seiten der Abgasanlage seitlich hinaus erstreckt, eine stabile Aufhängung der Abgasanlage bereitgestellt werden kann, ohne Einbußen bei der Dämpfung und der akustischen Entkopplung hinnehmen zu müssen.

Mit der erfindungsgemäßen Anordnung ist es auch möglich, eine Anordnung zur Aufhängung einer Abgasanlage zu schaffen, ohne metallische Bauteile bei Gewährleistung ausreichender Betriebssicherheit und Dauerfestigkeit verwenden zu müssen. Damit können besonders leichtgewichtige, kostengünstige und einfach recyclebare Abgasanlage-Aufhängeanordungen geschaffen werden. Es zeigte sich bei Versuchen, daß bei einer Stahlkonstruktion mit Hilfe von entsprechenden Materialaussparungen eine Gewichtsreduzierung nur bei entsprechender individualisierter, konstruktiver Anpassung der Metallträgers für gewünschte Isolationseigenschaften erreichbar war. Trotz hoher Temperaturen, die Abgasanlagen im Betrieb aufweisen, stellte sich der vorzugsweise ausschließliche Einsatz von Kunststoff für die Struktur aus Langbasis, Haltearm und Haltestift trotz bestehender Vorurteile einer Metallfreiheit als ausreichend betriebsstabil und dauerfest heraus. Dabei bietet die Kunststoffeinheit aus Langbasis, Haltearm und Haltestift eine hervorragende Anbindungsmöglichkeit für die elastischen Schlaufe dar, die unterstützt von der Kunststoffeinheit die Isolations- und Dämpfungsaufgabe der Aufhängeanordnung optimal erfüllt.

Bei einer bevorzugten Ausführung der Erfindung ist der Haltearm im wesentlichen orthogonal zu einer Bodengruppe der Karosserie oder der Langbasis montiert. Dabei kann sich der Haltestift im wesentlichen senkrecht zum Haltearm erstrecken.

Um eine einfache Montage der Schlaufe an dem Halteteil zu realisieren, ist vorzugsweise der Haltestift insbesondere an dessen freien Ende mit einer Querschnittserweiterung zum Einknüpfen in eine Öffnung der Schlaufe versehen.

Um eine stabile Anbindung der Lanbasis an die Fahrzeugkarosserie bereitzustellen, kann die Langbasis wenigstens ein Montageloch in einer der Karosserie zuzuwendenden sockelartigen Abschnitt aufweisen, in dem eine Verstärkungshülse beispielsweise aus Aluminium oder Stahl, insbesondere lösbar, eingesetzt ist.

Bei einer besonders bevorzugten Ausführung des erfindungsgemäßen steifen Trägers sind zwei sich in zur Längserstreckung der Abgasanlage senkrechten Querrichtung gegenüberliegende Haltearme vorgesehen. Mit der paarweisen Anordnung der Haltearme wird eine im wesentlichen zur Längsrichtung der Abgasanlage symmetrische Aufhängung der Abgasanlage bereitgestellt. Beide Haltearme haben jeweils einen bereits oben erläuterten Haltestift, an dem eine Schlaufe getragen ist. Die Haltestifte erstrecken sich parallel zueinander oder fluchten miteinander.

Die Langbasis kann mit seinen beiden Enden zwei gegenüberliegende Längsaußenseiten der Abgasanlage überragen, wobei die Langbasis, die durch den Langträger verbindbaren Haltearme sowie die Haltestifte an den Haltearmen aus einem einzigen Kunststoffteil gefertigt, insbesondere gespritzt, sein können.

Vorzugsweise sind die Abgasanlage und insbesondere die Kardanwelle des Kraftfahrzeugs von der Langbasis und den Haltearmen insbesondere auf deren der Karosserie zugewandten Seite vollständig überbrückt.

Bei einer bevorzugten Ausführung der Erfindung ist das Kunststoffteil aus einem Polyamid oder Duroplast gefertigt, insbesondere spritzgegossen. Dabei kann das Kunststoffteil aus einer Polyamidmatrix mit Glasfasern bestehen. Ein Polyamid, insbesondere ein Polyamid 66, mit etwa 15 bis 50%, vorzugsweise etwa 35%, Glasfasern, können bevorzugt verwendet werden.

Vorzugsweise ist die Schlaufe aus einem Silikon-Kautschuk, insbesondere VMQ, gebildet. Sollte eine Abgasanlage für einen Benzinmotor herangezogen werden, stellte sich der Silikon-Kautschuk als besonders vorteilhaft für die Schlaufe heraus. Alternativ kann die Schlaufe aus einem EPDM-Gummi, insbesondere einem EPDM Peroxid, bestehen. Besonders geeignet ist der EPDM-Gummi für eine Schlaufe, wenn die Abgasanlage für einen Dieselmotor verwendet wird.

Bei einer bevorzugten Ausführung der Erfindung ist die Schlaufe ein Ringteil, das innenseitig Verstärkungstreben oder -rippen aufweist. Dabei können die Verstärkungsstreben zwei Durchgänge oder Lagerbuchsen einerseits zum Anbinden des Haltestifts und andererseits zum Aufnehmen eines Haltebügels zum Greifen der Abgasanlage zumindest teilweise bilden.

Weitere Vorteil, Eigenschaften und Merkmale der Erfindung werden durch die folgende Beschreibung bevorzugter Ausführungen der Erfindung anhand der beiliegenden Zeichnungen beschrieben, in denen zeigen:
- Figur 1: eine perspektivische Ansicht einer erfindungsgemäßen Aufhängung in einer ersten Ausführung; und
- Figur 2: eine perspektivische Ansicht einer erfindungsgemäßen Aufhängung in einer zweiten Ausführung.

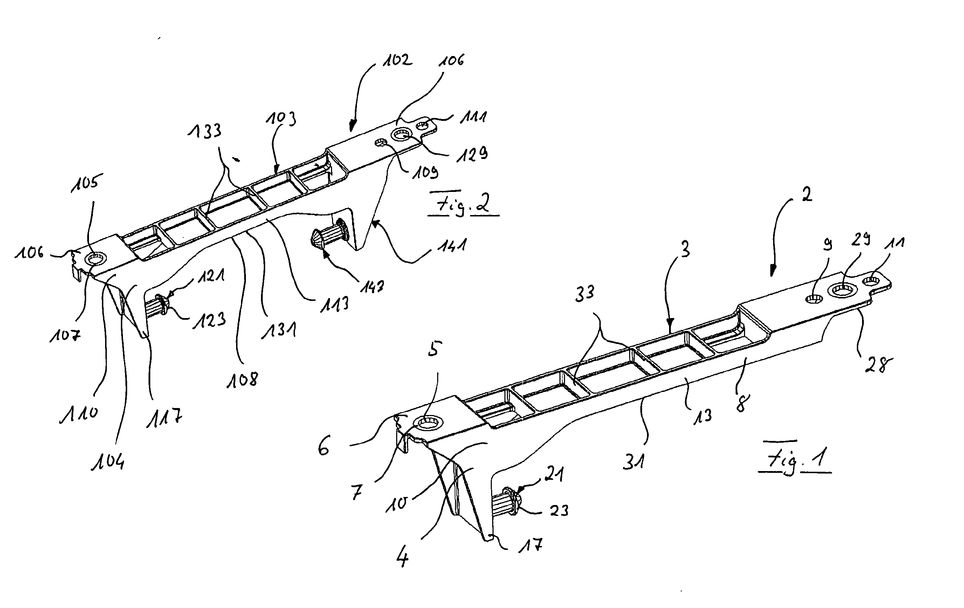

In Figur 1 ist der erfindungsgemäße steife Träger einer Aufhängung einer Kraftfahrzeug-Abgasanlage (nicht dargestellt) ohne Elastomerschlaufe im allgemeinen mit der Bezugsziffer 2 versehen. Der Träger 2 für die elastische Aufhängung umfaßt als Hauptbestandteil eine Langbasis 3, einen Haltearm 4 und einen Haltestift 21 zum Aufnehmen einer nicht dargestellten Elastomerschlaufe und einen nicht dargestellten abgasanlagenseitigen Greifbügel für einen direkten Halteeingriff mit der Abgasanlage.

In der Langbasis 3, und zwar an einem ersten kurzen Abschnitt bezüglich des Haltearms 4, ist ein Montagehauptloch 5 eingebracht, in der eine Verstärkungshülse 7 aus Aluminium oder Stahl umspritzt oder nachträglich montiert, insbesondere eingepreßt, ist. Zwei weitere kleinere Löcher 9, 11 sind an der Langbasis 3 an deren langen Abschnitt 8 zum genauen Positionieren des steifen Trägers 2 bei dessen Montage vorgesehen.

An einem Übergang 10 des Haltearms 4 schließt plattenartige, längliche Zunge 13 der Langbasis 3 an. Die Zunge 13 dient dazu, den Träger 2 der Aufhängung in einer genauen Höhenposition zu einer nicht dargestellten Bodengruppe der Karosserie zu positionieren, indem die zu einerzugeordneten Bodengruppenseite formkomplementäre, ebene Unterseite der Langbasis 3 flächig an der Bodengruppe anliegt.

Von der Langbasis 3 erstreckt sich der Haltearm 4 in einer Höhenrichtung senkrecht zur Zunge 13 zu einem freien Ende 17. An einer Innenquerseite des Haltearms 1 im Bereich des freien Endes 17 ist der Haltestift 21 ortsfest angebracht, indem er einstückig mit dem Haltearm 4 gefertigt ist. Der Haltestift 21 erstreckt sich in einer zur Fahrtlängsrichtung des Kraftfahrzeugs im wesentlichen senkrechten Querrichtung parallel zur Zunge 13 und umfaßt an seinem freien Ende eine Einknüpfverdickung 23. Von der Einknüpfverdickung 23 erstreckt sich der Haltestift 21 in einer kontinuierlich zylindrischen Form zum Haltearm 4.

An dem Haltestift 21 wird die nicht dargestellte Elastomerschlaufe aufgeknüpft, wobei die Einknüpfverdickung 23 mit einer entsprechend dimensionierten Knüpfbuchse der Elastomerschlaufe knüpfend zusammenwirken soll. Die Elastomerschlaufe ist mit dem nicht dargestellten Umgreifbügel verbunden, der direkt die Abgasanlage tragen soll.

Die an dem Haltearm 4 einstückig anschließende Zunge 13 kann als sich in Querrichtung erstreckende Traverse oder Tunneltraverse 27 bezeichnet werden. Die Traverse 27 erstreckt sich mit im wesentlichen gleicher Breite von dem Haltearm 4, und zwar im montierten Zustand in Querrichtung. Dabei ist die Länge der Traverse 27 derart abgestimmt, daß die Abgasanlage und gegebenenfalls eine Kardanwelle in Querrichtung auf deren der Karosserie zugewandten Seite überbrückt werden.

Für eine statische feste Montage des Trägers 2 ist an einem freien Ende 28 der Tunneltraverse 27 ein weiteres Montagehauptloch 29 vorgesehen, die mit einer Aluminium- oder Stahlhülse 7 verstärkt ist. Die Löcher 9, 11 sind an dem freien Ende 28 vorgesehen.

Im Mittelbereich 31 der Traverse 27 sind auf deren der Karosserie zugewandten Seite mehrere Verstärkungsrippen 33 ausgebildet, die bei monierten Träger 2 in Fahrtrichtung liegen.

In Figur 2 ist eine weitere perspektivische Ansicht eines erfindungsgemäßen steifen Trägers für eine elastische Aufhängung einer Abgasanlage dargestellt. Zur besseren Lesbarkeit der Figurenbeschreibung werden für identischen oder gleiche Bauteile der Aufhängung 2 der Figur 1 dieselben Bezugsziffern verwendet. Diese Aufhängung 2 gemäß Figur 3 unterscheidet sich von der gemäß Figur 2 darin, daß ein zweiter Haltearm 141 an der Traverse 127 angeordnet ist. Der weitere Haltearm 141 entspricht im wesentlichen spiegelsymmetrisch dem Aufbau des Haltearms 4.

Die Haltestifte 121 und 143 liegen sich fluchtend gegenüber und weisen aufeinander zu. Die Haltestifte 121, 143, die Haltearme 104, 141 sowie die Traverse 127 sind aus einem Kunststoffteil gespritzt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 2, 102: Träger
- 4, 104: Haltearm
- 3, 103: Langbasis
- 5, 29, 105: Montagehauptloch
- 6: kurzer Abschnitt
- 7, 107: Verstärkungshülse
- 8: langer Abschnitt
- 9, 11: Löcher
- 10: Übergang
- 13: Zunge
- 17: freies Ende
- 21, 121: Haltestift
- 23, 123: Einknüpfverdickung
- 27, 127: Traverse
- 28: Ende
- 31, 131: Mittelbereich
- 33, 133: Verstärkungsrippen
- 141: weiterer Haltearm
- 143: Haltestift

## Patentansprüche

1. Steifer Träger für eine Aufhängung einer Abgasanlage eines Kraftfahrzeugs, umfassend eine insbesondere stangenartige Langbasis, die zum ortsfesten Anbringen an einem Karosserieteil ausgelegt ist und derart bemessen ist, daß er einen Zwischenraum zwischen der Abgasanlage und der Karosserie quer zur Fahrtrichtung erstreckend durchdringt und mit zwei Enden zwei gegenüberliegende Längsaußenseiten der Abgasanlage in Querrichtung überragt, wenigstens einen an der Langbasis (13) fest angeordneten Haltearm (4, 141), der neben der Abgasanlage von der Karosserie weg ragt, und einen an dem Haltearm (1, 101) ortsfest angeordneten Haltestift (21, 121), an dem eine elastische Schlaufe zum Anbinden an die Abgasanlage ankoppelbar ist.

2. Träger nach Anspruch 1, bei der der Haltearm (1, 101) im wesentlichen orthogonal zu einer Bodengruppe der Karosserie angeordnet ist.

3. Träger nach Anspruch 1 oder 2, bei der sich der Haltestift (21, 121) im wesentlichen parallel zu einer Bodengruppe der Karosserie erstreckt.

4. Träger nach einem der Ansprüche 1 bis 3, bei der der Haltestift (21, 121) einen Querschnittserweiterung zum Einknüpfen in eine Öffnung der Schlaufe aufweist.

5. Träger nach einem der Ansprüche 1 bis 4, bei der Haltearm (1, 101) wenigstens eine Montageöffnung in einer der Karosserie zuzuwenden Basis (3, 103) aufweist, in die eine Verstärkungshülse insbesondere aus Aluminium oder Stahl eingesetzt ist.

6. Träger nach einem der Ansprüche 1 bis 4, bei der zwei sich in zur Fahrtrichtung senkrechten Querrichtung gegenüberliegende Haltearme vorgesehen sind.

7. Träger nach einem der Ansprüche 1 bis 6, bei welcher die Langbasis, der wenigstens eine Haltearme (1, 101) und der wenigstens eine Haltestift (21, 121) aus einem Kunststoffteil gefertigt sind.

8. Träger nach einem der Ansprüche 1 bis 7, bei der wenigstens die Abgasanlage und insbesondere die Kardanwelle von der Langbasis und den Haltearmen (21, 121) zumindest teilweise umgeben sind.

9. Träger nach einem der Ansprüche 1 bis 8, bei der das Kunststoffteil aus einem Polyamid gefertigt, insbesondere spritzgegossen, ist.

10. Träger nach einem der Ansprüche 1 bis 9, bei der das Kunststoffteil aus einer Polyamidmatrix mit Glasfasern besteht, wobei insbesondere ein Polyamid, insbesondere ein Polyamid 66, mit etwa 35 % Glasfasern verwendet ist.

11. Träger nach einem der Ansprüche 1 bis 11, bei der die Schlaufe aus einem Silikon-Kautschuk, insbesondere VMQ, besteht, wobei insbesondere für eine Abgasanlage eines Benzinmotors der Silikon-Kautschuk für die Schlaufe verwendet ist und/oder vorzugsweise die Schlaufe aus einem EPDM-Gummi, insbesondere einem EPDM Peroxid, besteht, wobei insbesondere für eine Abgasanlage eines Dieselmotors der EPDM-Gummi für die Schlaufe verwendet ist.

12. Träger nach einem der Ansprüche 1 bis 11, bei der die Schlaufe ein Ringteil ist, das innen Verstärkungsstreben aufweist.

13. Träger nach Anspruch 12, bei der die Verstärkungsstreben zwei Durchgänge zum Anbinden des Haltestifts (21, 121) und eines Bügels zum Halten der Abgasanlage bilden.

14. Träger nach einem der Ansprüche 1 bis 13, bei der die Langbasis (1, 101) derart an der Karosserie montiert ist, daß der Haltestift (21, 121) quer zur Fahrtrichtung auf die Abgasanlage zu oder von dieser weg weist.

15. Elastische Aufhängung für eine Abgasanlage eines Kraftfahrzeugs mit einem nach einem der Ansprüche 1 bis 14 ausgebildeten steifen Träger, einer elastischen Schlaufe, die mit dem Haltestift verbunden ist, und einem Bügel, der die Schlaufe mit dem Karosserieteil verbindet.
